# EUROPEAN PATENT APPLICATION

(11) **EP 1 369 035 A1**
(43) Date of publication of application: **10.12.2003**
(21) Application number: 03380130.9
(22) Date of filing: 02.06.2003
(51) Int. Cl.: A01K 25/00

(54) **Anti-stress muzzle**

(30) Priority: 03.06.2002 ES 200201414 U
(71) Applicant: Lopez Candil, Enrique, 08980 Sant Feliu de Llobregat, (Barcelona) (ES)
(72) Inventor: Lopez Candil, Enrique, 08980 Sant Feliu de Llobregat, (Barcelona) (ES)
(74) Representative: Manresa Val, Manuel

(57) **Abstract**

It includes at least two faced surfaces, one upper (1) and another lower (2), that surround at least a part of the nose and mouth of the animal; at least one slide guide (3) with a predetermined minimum and maximum path, that joins both two faced surfaces (1,2); and joint means (4) of the mentioned muzzle with the body of the animal.

## Description

Anti-stress muzzle that comprises two faced surfaces that surround the nose and the mouth of the animal; at least one slide guide with a predetermined path, that joins both two faced surfaces; and joint means of the mentioned muzzle with the body of the animal; allowing the animal to open and to close widely the mouth in the inner part of the referred muzzle.

### BACKGROUNDS OF THE INVENTION AND BRIEF DESCRIPTION OF THE APPLICATION

It is known in the state of the art different mechanisms that they avoid that the animal can bark, bite or take off the muzzle.

But all those inventions in fact they create a situation of stress in the animal, especially dogs, that feel unprotected, since the mouth is its main means to perspire, to defend themselves, without being able neither to bark nor to bite nor to drink.

The present invention is a progress in the field of the care and security of the animals, specially the dogs.

One of the great problems that the animals that take muzzle suffer is the stress that it causes them not to be able to open the mouth and hardly to be able to bark.

At the same time if the animal wants to drink it is precise that the owner takes off the muzzle to him and later it installs it again. It is why many of these animals are very against to that a muzzle is taken to them, which at the end it causes that many owners do not put muzzle to the animals, being them a danger for the rest of citizens.

The present invention allows the animal to move the lower jawbone in such a way that it can bark and drink water, being avoided that the animal is stressed and it is nervous, because with exception to bite it can do or make the rest of activities.

Moreover as it has an opening that it has been thought in order the animal can drink or stick the tongue out, it avoids that the owner must take off the muzzle to the animal.

In addition the muzzle is adaptable to the size of the mouth of the animal, reason why having a few sizes it is possible to reach all the types of mouth of the dogs.

### BRIEF DESCRIPTION OF THE DRAWINGS

And in order to facilitate the explanation, it is attached to the present description two sheets of drawings where it is shown an embodiment, only as illustrative and non-limitative example, in which:
- Figure 1 is a frontal view of the object of the present invention.
- Figure 2 is a lateral view of the object of the present invention.

### PARTICULAR EMBODIMENT OF THE PRESENT APPLICATION

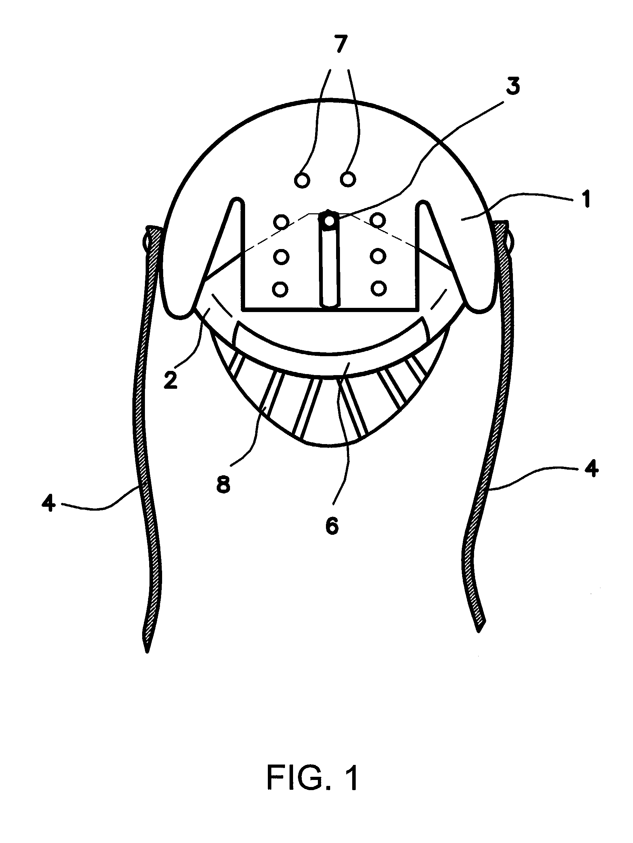

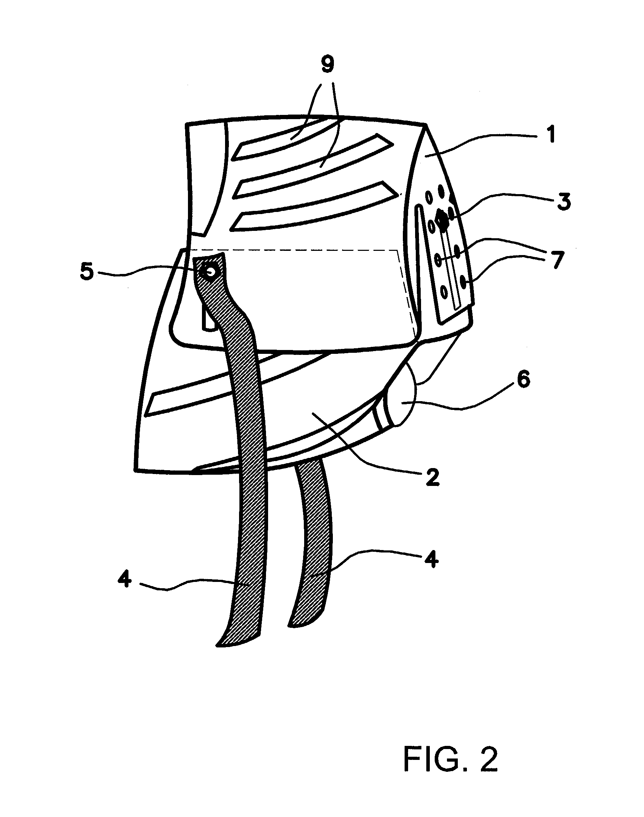

Thus in figures 1 and 2 two faced surfaces, upper 1 and lower 2, are shown, a slide guide 3, joint means 4 of the mentioned muzzle with the body of the animal, means 5 to fit to the muzzle to the mouth and nose of the animal, an opening 6, and several opening - air holes 7-8-9.

Thus in a particular embodiment it is introduced the mouth of the animal into the anti-stress muzzle and the muzzle is fitted, through the means 5, to the measurement and size of the mouth of the animal.

Later the mentioned muzzle is fastened by the joint means 4, in this particular embodiment some straps, that are located around the head and neck of the animal, in such a way that the animal cannot take off the muzzle.

That is to say, the straps 4 are placed behind the ears (not illustrated in the drawings) and from that last position two additional straps go to the neck of the animal surrounding it, avoiding that the animal can take off the muzzle.

For all of the above stated if the animal wants to bark will be able to open the mouth, moving the lower jawbone and moving the lower faced surface 2 by means of the slide guide 3, avoiding that when the dog can not bark this one can feel stressed and it is nervous.

At the same time through the opening 6 the dog can drink water or any other liquid.

When the mouth of the animal is fitted into the muzzle, in the moment when the dog closes the mouth, the lower jawbone of the dog will drag the lower faced surface 2 by means of the slide guide 3, returning the muzzle to the starting point.

Also it includes a series of openings 7 in the frontal part of the muzzle to allow a better breathing and perspiration of the dog, as well as other openings 8 and 9 around the faced surfaces 1 and 2.

For the case of animals with very long nose it would be better to place the slide guides in the lateral side, also joining the faced surfaces and moving the lower one up and down.

The present patent describes a new anti-stress muzzle. The examples here mentioned are not limitative of the present invention, for that reason it will be able to have different applications and/or adaptations, all of them within the scope of the following claims.

## Claims

1. Anti-stress muzzle **characterized in that** it includes:
- at least two faced surfaces, one upper (1) and another lower (2), that surround at least a part of the nose and mouth of the animal;
- at least one slide guide (3) with a predetermined minimum and maximum path, that joins both two faced surfaces (1,2); and
- joint means (4) of the mentioned muzzle with the body of the animal.

2. Anti-stress muzzle in accordance to claim 1 **characterized in that** the referred faced surfaces (1,2) are adjustable in order to correspond the size of the mouth and nose of the animal with the muzzle.

3. Anti-stress muzzle in accordance to claim 1 or 2 **characterized in that** it includes an opening (6), in the faced lower surface (2), with a size enough to be able to stuck the animal's tongue out and drink water.

4. Anti-stress muzzle in accordance to claim 3 **characterized in that** it includes several opening - air holes (7,8,9).
